# EUROPÄISCHE PATENTSCHRIFT

(11) **EP 1 608 515 B1**
(45) Veröffentlichungstag und Bekanntmachung des Hinweises auf die Patenterteilung: **16.02.2011**
(21) Anmeldenummer: 05728205.5
(22) Anmeldetag: 10.03.2005
(51) Int. Cl.: B41J 29/12, G01P 1/12

(54) **DRUCKER**
PRINTER
IMPRIMANTE

(30) Priorität: 19.03.2004 DE 102004013963
(43) Veröffentlichungstag der Anmeldung: 28.12.2005
(73) Patentinhaber: Continental Automotive GmbH, 30165 Hannover (DE)
(72) Erfinder: WAHLER, Torsten, 78073 Bad Dürrheim (DE); RIESTER, Thomas, 78052 Villingen-Schwenningen (DE); PAUCKER, Jürgen, 78048 Villingen-Schwenningen (DE)
(86) Internationale Anmeldenummer: PCT/EP2005/051066
(87) Internationale Veröffentlichungsnummer: WO 2005/090087

(56) Entgegenhaltungen:
- EP-A- 1 037 161
- EP-A- 1 103 927

## Beschreibung

Die Erfindung betrifft einen Drucker mit einer länglichen Medienausgabeöffnung, insbesondere für einen digitalen Tachographen eines Kraftfahrzeugs, mit mindestens einer, die Medienausgabeöffnung in Querrichtung begrenzenden Anlagefläche, an welcher das Druckmedium während der Ausgabe entlang gleitet. Daneben ist ein Druckverfahren für einen Drucker vorgenannter Art Gegenstand der Erfindung.

Drucker der vorgenannten Art sind insbesondere kleinformatige Geräte, wie sie beispielsweise an Kassenarbeitsplätzen oder in Bankautomaten zum Drucken von Quittungen vorgesehen sind. Regelmäßig ist der Medienvorrat hierbei auf einer Rolle aufgewickelt und bedruckte Abschnitte können mittels einer Abreißkante von dem Medienvorrat getrennt werden.

Vor bisher unbekannte Anforderungen wird die Entwicklung bei dem Einsatz eines Druckers in der zukünftigen Fahrtschreiber-Generation, den digitalen Tachographen, gestellt, bei welchem statt der bisher verwendeten Diagrammscheibe zum Registrieren der fahrerarbeitsplatzspezifischen Daten eine Chipkarte zum Einsatz kommt. Eine Möglichkeit, die aufgezeichneten Daten auszugeben, besteht darin, mittels eines eingebauten Druckers die relevanten Daten auf einen Papierstreifen auszudrucken. Gemäß der Gefahrengutvorschrift-Straße (GGVS) muss ein derartig in das Fahrzeug eingebautes Gerät der Schutzklasse IP 54 entsprechen, der Drucker und auch seine Medienausgabeöffnung müssen dementsprechend unter bestimmten Bedingungen spritzwasserdicht sein.

Dementsprechend ist es Aufgabe der Erfindung, die Medienausgabeöffnung eines Druckers in einer Weise abzudichten, dass trotzdem das Druckmedium aus der Ausgabeöffnung ausgegeben werden kann.

Zur Lösung der erfindungsgemäßen Aufgabe wird ein Drucker der eingangs genannten Art vorgeschlagen, der die kennzeichnenden Merkmale des Anspruchs 1 aufweist. Daneben wird ein Druckverfahren gemäß Anspruch 20 zur Lösung angegeben. Die abhängigen Unteransprüche beschreiben zweckmäßige Weiterbildungen der Erfindung.

Ein entscheidender Vorteil der erfindungsgemäßen Anordnung ist in der elastischen Anlage der Dichtungsanlage gegen die Anlagefläche begründet, woraus sich eine stets zuverlässige Dichtheit gegenüber beispielsweise Spritzwasser oder ähnlichen schädlichen Medien ergibt. Eine entsprechende Dimensionierung des Elastizitätsmoduls in Abhängigkeit von der Geometrie des Dichtungsverschlusses sorgt für eine bestimmte Flächenpressung zwischen der Dichtungsanlage und der Anlagefläche, die das Eindingen der schädlichen Medien verhindert und gleichzeitig die Ausgabe des Druckmediums ermöglicht. Hierbei ist die Anlage zwischen der Anlagefläche und der Dichtungsanlage in Ausgaberichtung von nur geringer Ausdehnung, so dass sich in Längsrichtung der Medienausgabeöffnung eine im Wesentlichen linienhafte Anlage ergibt. Die dementsprechend als schmale Kante ausgebildete Dichtungsanlage, welche elastisch gegen die Anlagefläche der Medienausgabeöffnung dicht verschließend drückt, kann trotz einer nur geringen Kraft, welche den Weg für das auszugebende Medium von der Dichtung freimacht, eine maximale Flächenpressung an der Anlagefläche erreichen und so hinreichende Dichtheit gewährleisten. Auf diese Weise ist es möglich, den Dichtungsverschluss passiv auszubilden, das heißt, der Druck des auszugebenden Mediums reicht aus, die Reibungskräfte des Mediums entgegen der Ausgaberichtung, erzeugt durch den Dichtungsverschluss, zu überwinden. Ein aktives Bewegen des Dichtungsverschlusses, beispielsweise elektromotorisch, ist nicht erforderlich. Besonders vorteilhaft ist eine Ausbildung des Dichtungsverschlusses, die es ermöglicht, dass auszugebendes Medium durch den sich zwischen dem Dichtungsverschluss und der Anlagefläche ergebenden Spalt hindurchgedrückt werden kann, ohne dass sich anfänglich Druckmedium in diesem Spalt befindet.

Eine besonders vorteilhafte Weiterbildung der Erfindung sieht vor, dass der Dichtungsverschluss als elastische Dichtung mit einer elastischen Dichtlippe ausgebildet ist, die elastisch gegen die Anlagefläche drückt. Die Dichtlippe passt sich vorteilhaft an Unebenheiten der korrespondierenden Anlagefläche an, so dass eine außerordentlich gute Ebenheit der Anlagefläche für die Dichtheit nicht erforderlich ist.

Mit Vorteil kann die Dichtung ein zumindest teilweise sichelförmiges Querschnittsprofil aufweisen, wobei die konvexe Seite des Querschnittsprofils entgegen der Ausgaberichtung des Druckmediums weist. Eine derartige Ausbildung bewirkt, dass von außen aufgebrachter Druck die Anlagekraft der elastischen Dichtlippe an der Anlagefläche gegebenenfalls nur lokal verstärkt, was zuverlässige Dichtheit gewährleistet.

Eine andere Variante einer erfindungsgemäßen Anordnung sieht eine Dichtung vor, die als Hohlprofil ausgebildet ist und eine einen Hohlraum umgebende Wand in Kreisform oder in elliptischer Form oder in ovaler Form aufweist. Der sich zwischen der Anlagefläche und der entsprechenden Dichtungsanlage bei dieser Ausbildung ergebende Spalt ist derart sich verjüngend ausgebildet, dass auszugebendes Medium selbst bei geringer Knickstabilität gleichsam gefangen in dem keilförmigen Profil die Dichtung problemlos bei der Ausgabe zu verdrängen vermag. Zweckmäßig ist eine derartige Hohlprofildichtung auf einer Welle mit kreisrundem Querschnitt gelagert, wobei die sich durch den Hohlraum des Hohlprofils erstreckende Welle einen kleineren Querschnitt hat als der Hohlraum eine lichte Weite aufweist, so dass sich ein zur Ausgabe des Mediums geeigneter Verformungsbereich des Hohlprofils ergibt.

Ein besonders kritischer Bereich der Dichtung befindet sich an den beiden die Längserstreckung begrenzenden Enden, wo mit Vorteil bei Ausbildung der Dichtung als sichelförmiges Querschnittsprofil jeweils ein Endquersteg in der konkaven Hohlfläche vorgesehen werden kann. Dieser Endquersteg wirkt für das beaufschlagende schädliche Medium wie eine Prallwand, so dass die Strömung von den Enden der Dichtung fortgeleitet wird. Diese Ausbildung bewirkt eine besonders gute Dichtigkeit, wenn die von dem jeweiligen Endquersteg beschriebene Ebene schräg zur Querrichtung angeordnet ist, so dass der Endquersteg mit einer in Längsrichtung verlaufenden Längsachse der Dichtung einen Winkel zwischen 30° und 85°, insbesondere 60° einschließt. Bei etwa 60° haben sich die geringsten Eindringraten des schädlichen Mediums feststellen lassen.

Die oben beschriebene Schrägstellung kann zweckmäßig derart sein, dass der Abstand zwischen den an den beiden Enden gegenüberliegenden Endquerstegen zur Dichtungsanlage hin zunimmt. Insbesondere bei der Anordnung des Dichtungsverschlusses mit nach unten weisender Dichtlippe bewirken die derartig schräg gestellten Endquerstege ein Abfließen des beaufschlagenden Mediums mit nur geringster Leckagerate

Um der an sich eher formlabilen Dichtung mit sichelförmigem Querschnittsprofil die erforderliche Stabilität zu verleihen, insbesondere um ein Einrollen oder Umstülpen zu verhindern, ist es sinnvoll, zwischen der Mitte bezüglich der Längsrichtung und dem jeweiligen Endquersteg auf beiden Seiten mindestens noch einen weiteren Quersteg mit gleichartiger Schrägstellung, insbesondere parallel zu dem Endquersteg verlaufend, in der konkaven Hohlfläche anzuordnen. Diese Querstege können ebenso wie die Endquerstege die Strömung eines beaufschlagenden schädlichen Mediums in eine gewünschte Abflussrichtung lenken, insbesondere wenn sie im Bereich ihrer Erstreckung in Querrichtung entlang der konkaven Hohlfläche zu dieser eine vollständige und dichte Anbindung aufweisen. Insbesondere der Vorgang der Montage wird bedeutend erleichtert, wenn die Dichtung aus zwei Komponenten besteht, welche eine unterschiedliche Härte aufweisen, wobei die weichere Komponente im Bereich der Dichtungsanlage angeordnet ist und die härtere Komponente im Wesentlichen in einem Bereich der Befestigung der Dichtung. Einerseits kann das Montagepersonal ein derartiges Bauteil mit einer gewissen Formstabilität leichter handhaben und andererseits reduziert sich die Gefahr von Fehlmontagen und Beschädigungen erheblich.

Die Dichtung kann in dem Bereich, der der Anlagefläche gegenüberliegt, an einer Begrenzung der Papierausgabeöffnung mit Vorteil befestigt werden. Hierbei kann die Dichtung mittels Zentriervorsprüngen geführt sein, wobei sie zweckmäßig in einem in Querrichtung der Dichtungsanlage gegenüberliegenden Befestigungsbereich mit Ausnehmungen versehen ist, wobei die Zentriervorsprünge in den Ausnehmungen angeordnet sind. Für eine positionsgenaue Zentrierung weisen die Ausnehmungen zweckmäßig Passflächen für die Zentriervorsprünge auf, welche von einer Schicht der weicheren Komponente auf der härteren Komponente gebildet sind. Eine Beschichtung der härteren Dichtungskomponente mit der weicheren im Anlagebereich der Ausnehmungen an den Zentriervorsprüngen ermöglicht eine Presspassung mit weniger genauen Toleranzen und dennoch weitestgehend gleicher Positionsgenauigkeit. Zweckmäßig ist die Dichtung von einem Befestigungsbauteil in der von der Zentrierung vorgegebenen Position gehalten und somit befestigt.

Statt als elastische Dichtlippe kann der Dichtungsverschluss auch als federnder Dichtungsverschluss ausgebildet sein mit einem als Blattfeder ausgebildeten Blattfederabschnitt, an den sich ein Verschlussabschnitt anschließt, der eine im Wesentlichen starre Anlagekante aufweist, die an der Anlagefläche mit einer Dichtungsanlage anliegt, wobei der Blattfederabschnitt den Verschlussabschnitt gegen die Anlagefläche elastisch vorspannt. Gegenüber der zuvor beschriebenen Lösung mit einer elastischen Dichtlippe weist die im Wesentlichen starre Anlagekante, die mit Vorteil aus Metall oder Kunststoff bestehen kann, den Vorzug einer längeren Standzeit aufgrund des geringeren Abriebes auf.

Insbesondere bei einer Anlagefläche aus spritzgegossenem Kunststoff ergeben sich zwischen der starren Anlagekante von regelmäßig sehr guter Ebenheit und der Anlagefläche, die nur mit kostenträchtigem Aufwand mit vergleichbarer Ebenheit hergestellt werden kann, Spalte von einigen Hundertstel Millimeter, die zweckmäßig ausgeglichen werden können, wenn die Anlagefläche mit einem weichen Belag versehen ist. Hinsichtlich der Reibungskoeffizienten und der Nachgiebigkeit erweist sich Filz als bevorzugtes Material für den weichen Belag. Für eine geeignete Zwangsführung des regelmäßig papierenen Druckmediums kann die Dichtung in Fortsetzung entgegen der Ausgaberichtung eine Gleitfläche im Anschluss an die Anlagekante aufweisen, welche mit der Anlagefläche an der Dichtungsanlage einen spitzen Winkel bildet. Insbesondere in dem Bereich der die Längserstreckung begrenzenden Enden der Dichtung ist es zweckmäßig, wenn die Dichtung etwas länger ausgebildet ist als die Ausgabeöffnung, so dass sich zwischen den die Ausgabeöffnung bildenden Wänden und der Dichtung ein enger Dichtungsspalt im Sinne einer Labyrinthdichtung ergibt. Dieser Spalt kann zusätzlich mit Vorsprüngen oder Prallwänden versehen sein.

Um die Dichtigkeit des erfindungsgemäßen Verschlusses einer Medienausgabeöffnung eines Druckers, insbesondere während der Stillstandszeiten des Druckers zu erhöhen, ist es zweckmäßig, wenn eine Steuereinheit den Medienvorschub aus einem Medienvorrat steuert und derart ausgebildet ist, dass in einem ersten Schritt eines Druckvorgangs Druckmedium des Medienvorrates in Ausgaberichtung jenseitig der Dichtung transportiert wird, in einem zweiten Schritt bedrucktes Druckmedium von dem Medienvorrat getrennt wird und in einem dritten Schritt das mit dem Medienvorrat verbundene verbliebene Medium entgegen der Ausgaberichtung soweit zurück transportiert wird, bis sich zwischen der Anlagefläche und der Dichtungsanlage kein Medium mehr befindet. Eine derartige Steuerung des Vorschubes verhindert vor allem den Eintrag schädlicher Medien durch Spalte zwischen dem im Bereich der Anlagefläche befindlichen Druckmedium und der Anlagefläche bzw. der Dichtungsanlage. Daneben wird eine Diffusion entgegen der Ausgaberichtung durch das Druckmedium verhindert. Der Vorschub des Druckmediums kann derart ausgebildet sein, dass mittels eines Schrittmotors das Druckmedium nach Trennung des bedruckten Teils um einen bestimmten Betrag entgegen der Ausgaberichtung transportiert wird, so dass im Bereich der Dichtungsanlage zwischen der Dichtung und der Anlagefläche kein Druckmedium mehr befindlich ist. Alternativ kann ein entsprechender Sensor der Steuereinheit eine Rückmeldung darüber geben, ob sich im Bereich der Dichtungsanlage Druckmedium befindet oder nicht.

Im Folgenden ist die Erfindung unter Bezugnahme auf Zeichnungen zur Verdeutlichung anhand von Ausführungsbeispielen näher erläutert. Neben den aufgezeigten Möglichkeiten ergeben sich für den Fachmann noch andere Ausgestaltungen erfindungsgemäßer Art. Es zeigen:
- Fig. 1 bis Fig. 4:: je eine perspektivische Ansicht von Komponenten einer erfindungsgemäßen Dichtung,
- Fig. 5:: eine perspektivische Darstellung ei- ner vollständigen erfindungsgemäßen Dichtung,
- Fig. 6:: eine perspektivische Darstellung ei- ner Frontblende mit einer montierten erfindungsgemäßen Dichtung aus rück- wärtiger Sicht,
- Fig. 7:: eine Schnittdarstellung einer erfin- dungsgemäßen Dichtung im eingebauten Zustand,
- Fig. 8:: eine perspektivische Darstellung ei- ner erfindungsgemäßen Dichtung, ein- gebaut in eine Frontblende aus rück- wärtiger Sicht,
- Fig. 9:: eine Schnittdarstellung durch eine erfindungsgemäße Dichtung im einge- bauten Zustand,
- Fig. 10 bis Fig. 12:: je eine Darstellung einer erfindungs- gemäßen Dichtung mit einem Blattfe- derabschnitt in drei unterschiedli- chen Ansichten,
- Fig. 13, 14:: je eine Schnittdarstellung durch eine erfindungsgemäße Dichtung mit einem Blattfederabschnitt im eingebauten Zustand, einmal mit Anlagefläche und einmal ohne Anlagefläche,
- Fig. 15:: eine perspektivische Darstellung ei- ner Frontblende mit eingebauter Dich- tung, welche einen Blattfederab- schnitt aufweist, aus rückwärtiger Perspektive,
- Fig. 16:: eine perspektivische Darstellung ei- ner an einer Schubladenblende vorge- sehenen Anlagefläche mit aufgeklebtem Filzstreifen aus einer Sicht von vor- ne,
- Fig. 17:: eine schematische Darstellung des er- findungsgemäßen Druckverfahrens in drei Schritten.

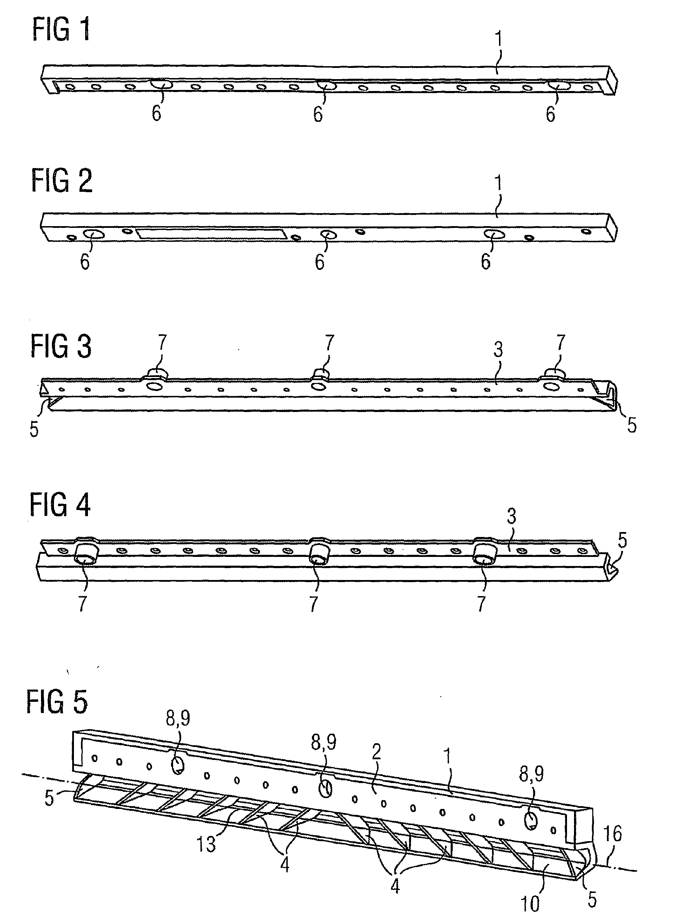

Die Figuren 1 und 2 zeigen eine härtere Komponente 1 eines erfindungsgemäßen Dichtungsverschlusses 2 in der Vorderansicht bzw. Rückansicht perspektivisch.

Die Figuren 3 und 4 zeigen eine weichere Komponente 3 in der Vorderansicht bzw. Rückansicht perspektivisch und in der Fig. 5 ist eine Zusammenstellung eines Dichtungsverschlusses 2, bestehend aus den zwei unterschiedlichen Komponenten 1, 3 dargestellt, wobei die weichere Komponente 3 im Unterschied

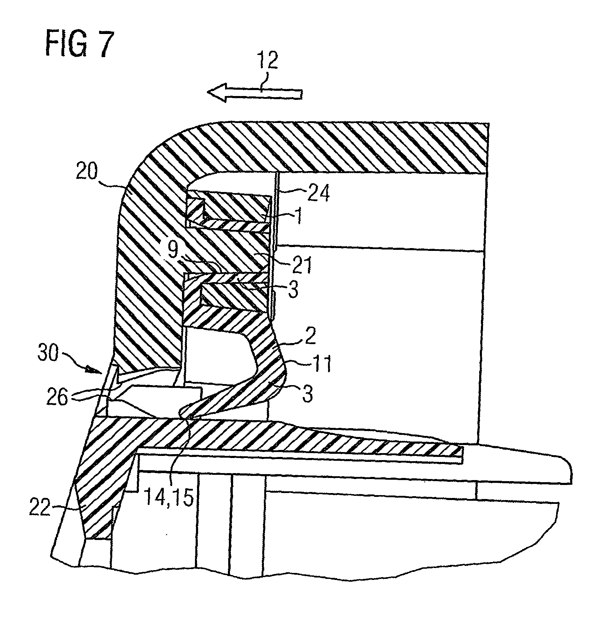

zu der Darstellung der Fig. 3 eine Vielzahl an Querstegen 4 neben zwei Endquerstegen 5 aufweist. Die härtere Komponente 1 des Dichtungsverschlusses 2 ist mit Ausnehmungen 6 versehen, die nicht dargestellten Zentriervorsprüngen der Aufnahme dienen, wobei die weichere Komponente 3 mit einer zentrisch hohlen Ausformung 7 für jede Ausnehmung 6 versehen ist, welche passgenau in die Ausnehmung 6 der härteren Komponente 1 einsetzbar ist und auf diese Weise eine Schicht 8 der weicheren Komponente 3 auf der härteren Komponente 1 und gleichzeitig eine Passfläche 9 für die nicht dargestellten Zentriervorsprünge bildet. Der Dichtungsverschluss 2 weist eine sichelförmige Dichtlippe 10 auf, deren konvexe Seite 11 im Einbauzustand, wie in Fig. 7 dargestellt, gegen die Ausgaberichtung 12 weist. Die gegenüberliegende konkave Hohlfläche 13 weist in die Ausgaberichtung 12 und ist zur Sicherheit gegen Einrollen oder Umstülpen bei Beaufschlagung mit Kräften aus einem Druckmedium (91) oder von außen beaufschlagenden schädlichen Medien mittels der Querstege 4 und der Endquerstege 5 verstärkt, die im Umfang ihrer Quererstreckung eine vollständige und dichte Anbindung an die konkave Hohlfläche 13 aufweisen. Wie in Fig. 7 dargestellt, liegt der Dichtungsverschluss 2 mittels einer Dichtungsanlage 14 auf einer Anlagefläche 15 elastisch vorgespannt an. Sowohl die Endquerstege 5 als auch die Querstege 4 weisen in ihrer Erstreckung von der Dichtungsanlage 14 fort eine Schrägstellung zu der Mitte bezüglich der Längserstreckung der Dichtung auf. Hierbei sind die Endquerstege 5 zu einer Längsachse 16 des Dichtungsverschlusses 2 in einem Winkel von etwa 65° angestellt und die Querstege 4 in einem Winkel von etwa 55°. Diese Anordnung ist zu einer durch die Mitte der zwischen Längserstreckung verlaufenden Ebene spiegelsymmetrisch ausgebildet.

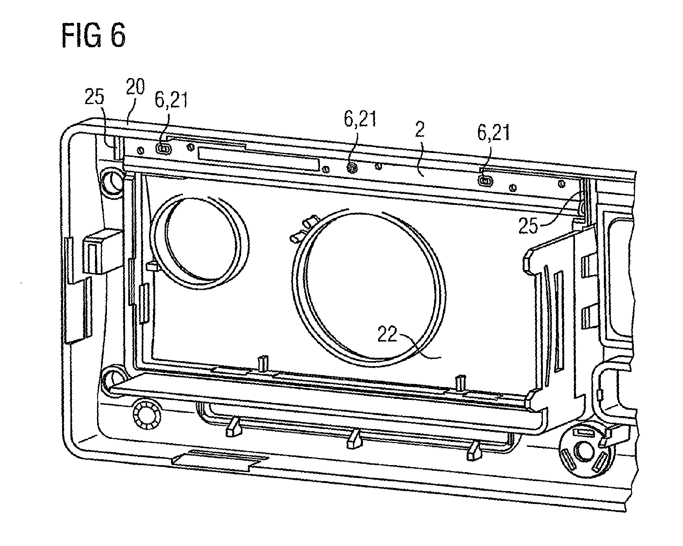

Fig. 6 zeigt den Dichtungsverschluss 2 gemäß der Fig. 5 in Zusammenstellung mit einer Frontblende 20 eines digitalen Tachographen aus rückwärtiger Perspektive. Die Ausnehmungen 6 stehen hierbei im Eingriff mit Zentriervorsprüngen 21 und die Dichtung liegt in einer in Fig. 7 dargestellten Art und Weise an einer in der Frontblende 20 eingesetzten Schubladenblende 22 an, welche Bestandteil einer Schublade für die Druckeinrichtung einschließlich einem Raum für einen rollenförmigen Medienvorrat an Druckmedium 91 ist. An den Enden des Dichtungsverschlusses 2 ist die Frontblende 20 mit jeweils einer sich senkrecht zur Frontblende 20 nach innen erstreckenden Trennwand 25 versehen, welche das seitliche Eindringen von schädlichen Medien verhindern soll. Die Schnittdarstellung der Fig. 7 zeigt in einer Zusammenstellung die Frontblende 20, welche einstückig mit den Zentriervorsprüngen 21 ausgebildet ist, den Dichtungsverschluss 2 mit der weicheren Komponente 3 und der härteren Komponente 1 und der Dichtlippe 10 im Zusammenwirken mit der Anlagefläche 15 im Bereich der Dichtungsanlage 14, welche Anlagefläche Bestandteil der Schubladenblende 22 ist. In Ausgaberichtung 12 hinter der Dichtlippe 10 befindet sich außerdem oben und unten je eine Abrisskante 26 für bedrucktes, nicht dargestelltes Druckmedium. Das Druckmedium 91 gleitet entlang der inwärtigen Verlängerung der Anlagefläche 15 in den Bereich der Dichtungsanlage 14, vorbei an der Dichtlippe 10 unter elastischer Verformung des Dichtungsverschlusses 2, aus einer Medienausgabeöffnung 30 in Ausgaberichtung 12. Der Dichtungsverschluss 2 ist in einem Befestigungsbereich 31 an der Frontblende 20 mittels Befestigungsbauteilen 32 gehalten, wobei der Dichtungsverschluss 2 mittels der Zentriervorsprünge 21 unter Anlage an den Passflächen 9, die mit der weicheren Komponente 3 beschichtet sind, positioniert wird.

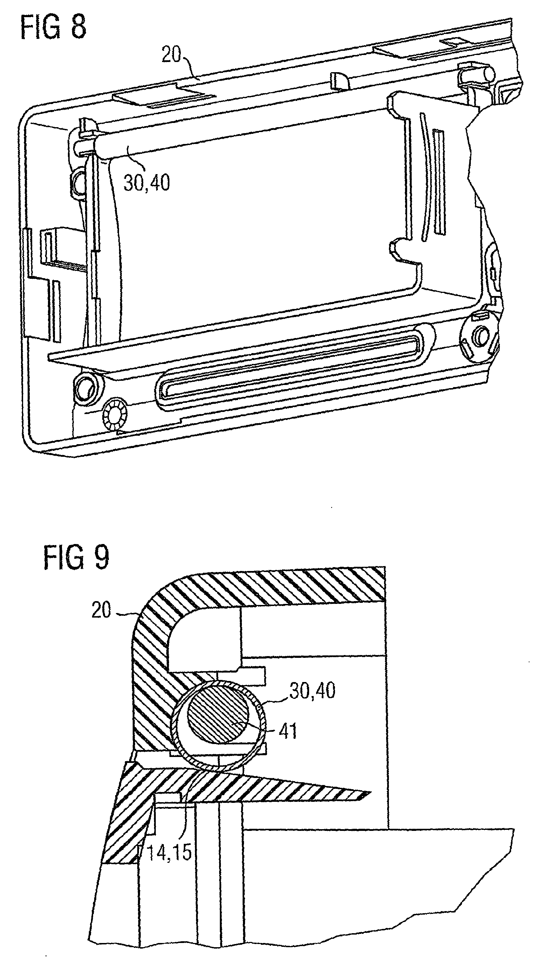

Eine andere Möglichkeit der Ausbildung eines erfindungsgemäßen Dichtungsverschlusses 2 zeigen die Fig. 8 und Fig. 9, wo der Dichtungsverschluss 2 als flexibler Schlauch 40 mit im Wesentlichen kreisförmigem Querschnitt ausgebildet ist. Bei ansonsten im Wesentlichen gleicher Anordnung wie bei der zuvor beschriebenen Ausbildung der erfindungsgemäßen Anordnung erfolgt die Befestigung des als Schlauch 40 ausgebildeten Dichtungsverschlusses 2 mittels einer Welle 41, die sich in Längsrichtung des Dichtungsverschlusses 2 im von dem Schlauch 40 gebildeten Hohlraum erstreckt, ebenfalls kreisrunden Querschnitts, wobei der Durchmesser der Welle 41 um einen Betrag niedriger gewählt ist, der im Wesentlichen einer im Rahmen der Ausgabe des Druckmediums entsprechenden Verformung entspricht.

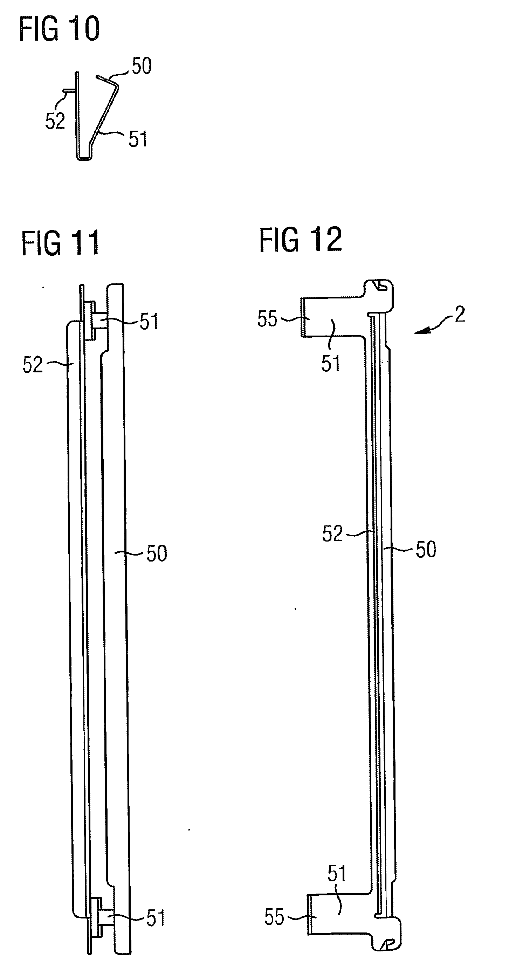

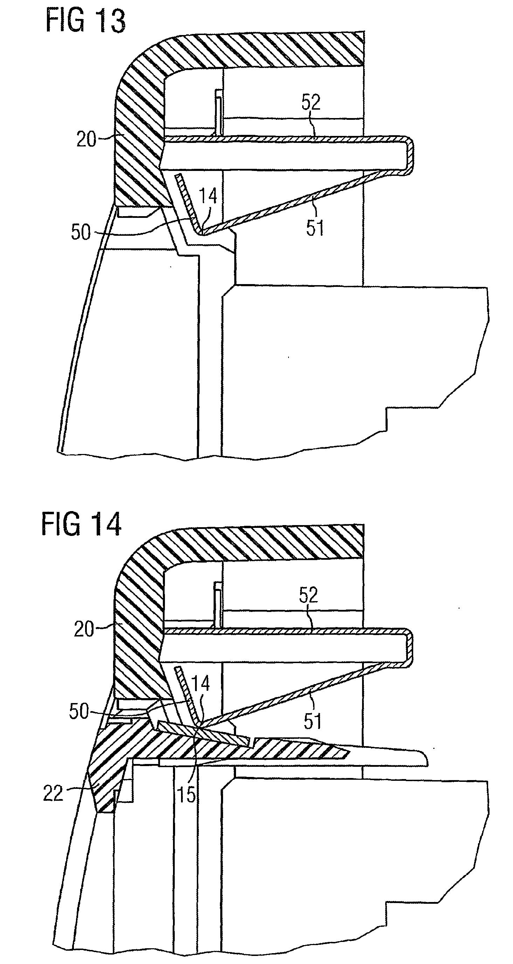

Die Figuren 10 bis 12 zeigen eine dritte Möglichkeit der Ausbildung eines erfindungsgemäßen Dichtungsverschlusses 2, wobei die Anordnung einen Blattfederabschnitt 51, einen Verschlussabschnitt 50 und einen Befestigungsabschnitt 52 aufweist. Der Dichtungsverschluss 2 ist einstückig als gebogenes Metallstanzteil hergestellt. Der Verschlussabschnitt 50 ist L-förmig gebogen, wobei die Außenkante der Biegung gemäß der Darstellungen der Figuren 13 und 14 als Dichtungsanlage 14 zur Anlage an einer Anlagefläche 15 ausgebildet ist. Der Blattfederabschnitt 51 ist im Wesentlichen in zwei an den Enden bezüglich der Längsrichtung des Dichtungsverschlusses 2 angeordnete Blattfedern 55 aufgeteilt, die unter Berücksichtigung der Steifigkeit des Verschlussabschnittes für eine gleichmäßige Anlagekraft der Dichtungsanlage 14 an der Anlagefläche 15 entlang der Längserstreckung gewährleisten. Die Anlagefläche 15 an der Schubladenblende 22 ist mit einem weichen Belag 56, nämlich einem Filz 57, versehen, welcher eine Spaltbildung zwischen der Dichtungsanlage 14 und der an dem als Spritzgussbauteil ohne besondere Toleranzen ausgebildeten Anlagefläche 15 der Schubladenblätter 22 verhindert.

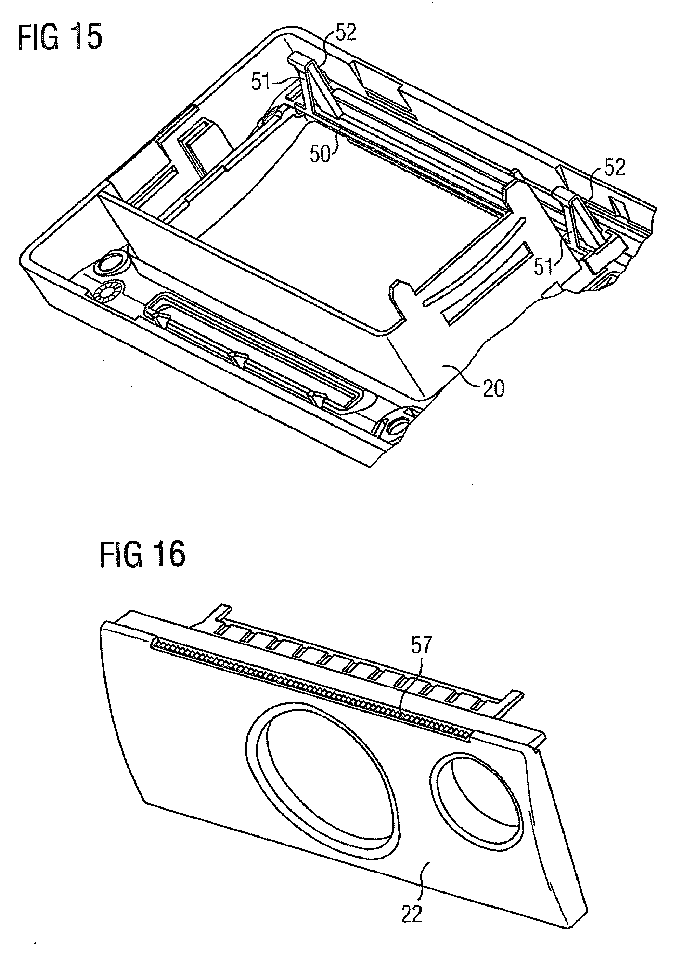

Eine perspektivische Darstellung der Einbausituation zeigt die Fig. 15, bei welcher an der Frontblende 20 analog der Anordnung der Fig. 6 ebenfalls Trennwände 25 an den seitlichen Enden des Dichtungsverschlusses 2 vorgesehen sind. Die die L-Form des Verschlussabschnittes 50 fortsetzenden Blattfederabschnitte 51 dienen einem nicht dargestellten Druckmedium 91 als zusätzliche Führung.

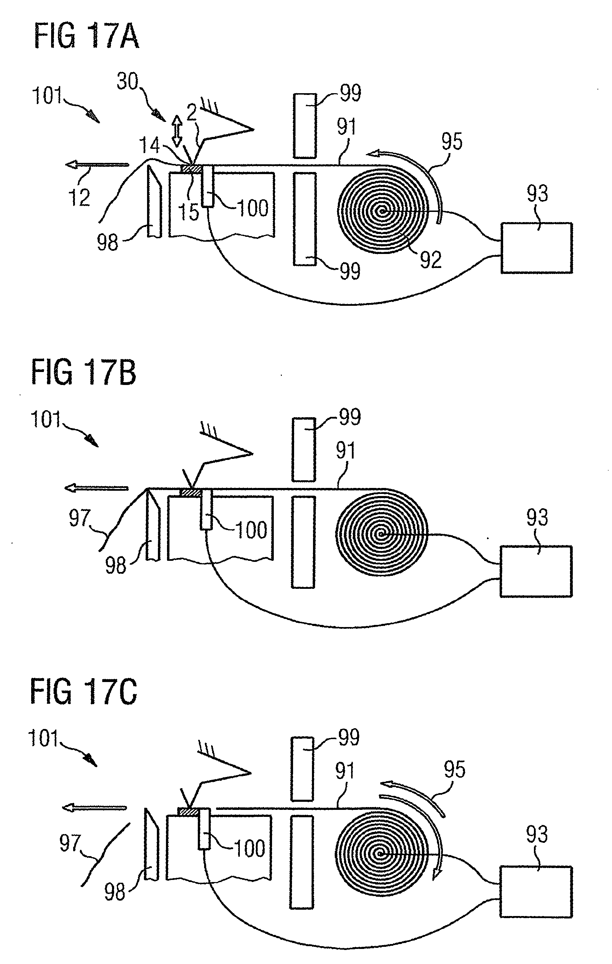

Das in Fig. 17 mit drei Schritten a, b, c schematisch dargestellte erfindungsgemäße Druckverfahren wird mittels einer Steuereinheit 93, eines Medienvorrates 92, der aus einer Rolle aufgerollten Druckmediums 91 besteht, einer Druckeinheit 99, einer Anlagefläche 15, einer Abrisskante 98 und einer bereits zuvor erläuterten Anordnung aus einem Dichtungsverschluss 2 mit einer Dichtungsanlage 14 durchgeführt. In einem ersten Schritt dreht sich der Medienvorrat 92 entgegen dem Uhrzeigersinn in einer Antriebsrichtung 95, so dass von der Druckeinheit 99 bedrucktes Druckmedium 91 aus der Medienausgabeöffnung 30 zwischen dem Dichtungsverschluss 2 entlang einer Anlagefläche 15 in Ausgaberichtung 12 transportiert wird. Ist ein vorbestimmter Druckabschnitt 97 jenseitig der in Ausgaberichtung 12 hinter der Medienausgabeöffnung 30 befindlichen Abrisskante 98 befördert, wird der Druckabschnitt 97 von dem Rest des Medienvorrats 92 getrennt. Anschließend steuert die Steuereinheit 93 den nicht dargestellten Antrieb des Medienvorrates 92 entgegen der Antriebsrichtung 95 im Uhrzeigersinn, so dass sich das am Medienvorrat 92 verbliebene Druckmedium 91 entgegen der Ausgaberichtung 12 bewegt, solange ein Sensor 100 das von der Abrisskante erzeugte Ende des Druckmediums 91 in Ausgaberichtung 12 vor dem Dichtungsverschluss 2 detektiert und dies an die Steuerung 93 meldet, welche den nicht dargestellten Antrieb des Medienvorrats 92 abstellt.

## Patentansprüche

1. Drucker (101) mit einer länglichen Medienausgabeöffnung (30), insbesondere für einen digitalen Tachographen eines Kraftfahrzeugs, mit mindestens einer die Medienausgabeöffnung (30) in Querrichtung begrenzenden Anlagefläche (15), an welcher das Druckmedium (91) während der Ausgabe entlanggleitet, **dadurch gekennzeichnet, dass** die Medienausgabeöffnung (30) einen länglichen Dichtungsverschluss (2) aufweist, der in Querrichtung beweglich ist und mit einer Dichtungsanlage (14) elastisch gegen die Anlagefläche (15) die Medienausgabeöffnung (30) verschließend drückt, wobei das Druckmedium (91) zwischen der Anlagefläche (15) und dem Dichtungsverschluss (2) in einer Ausgaberichtung (12) ausgebbar ist.

2. Drucker (101) nach Anspruch 1, **dadurch gekennzeichnet, dass** der Dichtungsverschluss (2) als elastische Dichtung mit einer elastischen Dichtlippe (10) ausgebildet ist, die elastisch gegen die Anlagefläche (15) drückt.

3. Drucker (101) nach Anspruch 2, **dadurch gekennzeichnet, dass** die Dichtung ein zumindest teilweise sichelförmiges Querschnittsprofil aufweist, wobei die konvexe Seite (11) des Querschnittsprofils entgegen der Ausgaberichtung (12) des Druckmediums weist.

4. Drucker (101) nach Anspruch 2, **dadurch gekennzeichnet, dass** die Dichtung als Hohlprofil ausgebildet ist und eine einen Hohlraum umgebende Wand eine Kreisform oder eine elliptische Form oder eine ovale Form aufweist.

5. Drucker (101) nach Anspruch 3, **dadurch gekennzeichnet, dass** die Dichtung im Bereich der die Längserstreckung begrenzenden Enden jeweils mit einem Endquersteg (5) in der konkaven Hohlfläche (13) versehen ist.

6. Drucker (101) nach Anspruch 5, **dadurch gekennzeichnet, dass** die von dem Endquersteg (5) beschriebene Ebene schräg zur Querrichtung angeordnet ist, so dass er mit einer in Längsrichtung verlaufenden Längsachse (16) der Dichtung einen Winkel zwischen 30° und 85°, insbesondere 60° einschließt

7. Drucker (101) nach Anspruch 6, **dadurch gekennzeichnet, dass** der Abstand zwischen den an den beiden Enden gegenüberliegenden Endquerstegen (5) zur Dichtungsanlage (14) hin zunimmt.

8. Drucker (101) nach Anspruch 2, **dadurch gekennzeichnet, dass** zwischen der Mitte bezüglich der Längsrichtung und dem jeweiligem Endquersteg (5) auf beiden Seiten mindestens noch ein weiterer Quersteg (4) mit gleichartiger Schrägstellung , insbesondere parallel zu dem Endquersteg (5) verlaufend, in der konkaven Hohlfläche (13) angeordnet ist.

9. Drucker (101) nach Anspruch 2, **dadurch gekennzeichnet, dass** zumindest die Endquerstege (5) im Bereich Ihrer Erstreckung in Querrichtung eine vollständige und dichte Anbindung an die konkave Hohlfläche (13) aufweisen.

10. Drucker (101) nach Anspruch 2, **dadurch gekennzeichnet, dass** die Dichtung aus zwei Komponenten (1, 3) besteht, welche eine unterschiedliche Härte aufweisen, wobei die weichere Komponente (3) im Bereich der Dichtungsanlage (14) angeordnet ist und die härtere Komponente (1) im Wesentlichen in einem Bereich der Befestigung der Dichtung.

11. Drucker (101) nach Anspruch 2, **dadurch gekennzeichnet, dass** die Dichtung im dem Bereich, der der Anlagefläche (15) gegenüberliegt an einer Begrenzung der Papierausgabeöffnung befestigt ist.

12. Drucker (101) nach Anspruch 11, **dadurch gekennzeichnet, dass** die Dichtung mittels Zentriervorsprüngen (21) geführt ist, in einem in Querrichtung der Dichtungsanlage (14) gegenüberliegenden Befestigungsbereich (52) die Dichtung mit Ausnehmungen (6) versehen ist, wobei die Zentriervorsprünge (21) in den Ausnehmungen (6) angeordnet sind.

13. Drucker (101) nach den Ansprüchen 10 und 12, **dadurch gekennzeichnet, dass** die Ausnehmungen (6) Passflächen (9) für die Zentriervorsprünge (21) aufweisen, welche von einer Schicht der weicheren Komponente (1) auf der härteren Komponente (3) gebildet sind.

14. Drucker (101) nach Anspruch 12, **dadurch gekennzeichnet, dass** ein Befestigungsbauteil (32) die Dichtung in dem Befestigungsbereich (52) klemmt.

15. Drucker (101) nach Anspruch 1, **dadurch gekennzeichnet, dass** der Dichtungsverschluss (2) als federnder Dichtungsverschluss ausgebildet ist mit einem als Blattfeder (55) ausgebildeten Blattfederabschnitt (51), an den sich ein Verschlussabschnitt (50) anschließt, der eine im Wesentlichen starre Anlagekante aufweist, die an der Anlagefläche (15) mit einer Dichtungsanlage (14) anliegt, wobei der Blattfederabschnitt (51) den Verschlussabschnitt (50) gegen die Anlagefläche (15) elastisch vorspannt.

16. Drucker (101) nach Anspruch 15, **dadurch gekennzeichnet, dass** die Anlagefläche (15) mit einem weichen Belag (56) versehen ist.

17. Drucker (101) nach Anspruch 16, **dadurch gekennzeichnet, dass** der weiche Belag (56) aus Filz (57) besteht.

18. Drucker (101) nach Anspruch 15, **dadurch gekennzeichnet, dass** die Dichtung in Fortsetzung entgegen der Ausgaberichtung (12) eine Gleitfläche im Anschluss an die Anlagekante aufweist, welche mit der Anlagefläche (15) an der Dichtungsanlage (14) einen spitzen Winkel bildet.

19. Drucker (101) nach Anspruch 15, **dadurch gekennzeichnet, dass** die Dichtung in Längsrichtung länger ausgebildet ist, als die Ausgabeöffnung.

20. Druckverfahren für einen Drucker (101) nach Anspruch 1 oder 15, **dadurch gekennzeichnet, dass** eine Steuereinheit (93) den Medienvorschub aus einem Medienvorrat (92) steuert und derart ausgebildet ist, dass in einem ersten Schritt (a) eines Druckvorgangs Druckmedium (91) des Medienvorrates (92) in Ausgaberichtung (12) jenseitig des Dichtungsverschlusses (2) transportiert wird, in einem zweiten Schritt (b) bedrucktes Druckmedium (91) von dem Medienvorrat (92) getrennt wird und in einem dritten Schritt (c) das mit dem Medienvorrat (92) verbunden verbliebene Druckmedium (91) entgegen der Ausgaberichtung (12) soweit zurück transportiert wird, bis sich zwischen der Anlagefläche (15) und der Dichtungsanlage (14) kein Druckmedium (91) mehr befindet.

21. Druckverfahren nach Anspruch 20, **dadurch gekennzeichnet, dass** der Drucker (101) einen Sensor (97) aufweist, der an die Steuereinheit (93) meldet, ob sich Druckmedium (91) im Bereich der Dichtungsanlage (14) an der Anlagefläche (15) befindet oder nicht.

## Claims

1. Printer (101) with an elongate media output port (30), in particular for a digital tachograph for a motor vehicle, with at least one bearing surface (15) which delimits the media output port (30) in a transverse direction and along which the printing medium (91) slides during output, **characterized in that** the media output port (30) has an elongate sealing closure (2) which is movable in the transverse direction and which presses elastically against the bearing surface (15) by means of a sealing feed guide (14), so as to close the media output port (30), the printing medium (91) being capable of being outputted between the bearing surface (15) and the sealing closure (2) in an output direction (12).

2. Printer (101) according to Claim 1, **characterized in that** the sealing closure (2) is designed as an elastic seal with an elastic sealing lip (10) which presses elastically against the bearing surface (15).

3. Printer (101) according to Claim 2, **characterized in that** the seal has an at least partially sickle-shaped cross-sectional profile, the convex side (11) of the cross-sectional profile pointing opposite to the output direction (12) of the printing medium.

4. Printer (101) according to Claim 2, **characterized in that** the seal is designed as a hollow profile, and a cavity-surrounding wall has a circular form or an elliptic form or an oval form.

5. Printer (101) according to Claim 3, **characterized in that** the seal is provided, in the region of the ends delimiting the longitudinal extent, in each case with a transverse end web (5) in the concave hollow surface (13).

6. Printer (101) according to Claim 5, **characterized in that** the plane described by the transverse end web (5) is arranged obliquely to the transverse direction, so that said web forms an angle of between 30° and 85°, in particular 60°, with a longitudinal axis (16) of the seal which runs in the longitudinal direction.

7. Printer (101) according to Claim 6, **characterized in that** the distance between the transverse end webs (5) located opposite one another at the two ends increases toward the sealing feed guide (14).

8. Printer (101) according to Claim 2, **characterized in that** a further transverse web (4) is arranged in the concave hollow surface (13), on both sides, between the middle with respect to the longitudinal direction and the respective transverse end web (5), said further transverse web having an identical oblique position and, in particular, running parallel to the transverse end web (5).

9. Printer (101) according to Claim 2, **characterized in that** at least the transverse end webs (5) have, in the region of their extent in the transverse direction, a complete and leaktight tie-up to the concave hollow surface (13).

10. Printer (101) according to Claim 2, **characterized in that** the seal consists of two components (1, 3) which have a different hardness, the softer component (3) being arranged in the region of the sealing feed guide (14), and the harder component (1) being arranged essentially in a region of fastening of the seal.

11. Printer (101) according to Claim 2, **characterized in that** the seal is fastened to a boundary of the paper output port in the region located opposite the bearing surface (15).

12. Printer (101) according to Claim 11, **characterized in that** the seal is guided by means of centering projections (21), and the seal is provided with recesses (6) in a fastening region (52) located opposite the sealing feed guide (14) in the transverse direction, the centering projections (21) being arranged in the recesses (6).

13. Printer (101) according to Claims 10 and 12, **characterized in that** the recesses (6) have, for the centering projections (21), fitting surfaces (9) which are formed by a layer of the softer component (1) on the harder component (3).

14. Printer (101) according to Claim 12, **characterized in that** a fastening component (32) clamps the seal in the fastening region (52).

15. Printer (101) according to Claim 1, **characterized in that** the sealing closure (2) is designed as a resilient sealing closure, with a leaf spring portion (51) which is designed as a leaf spring (55) and which has adjoining it a closing portion (50) having an essentially rigid bearing edge which bears against the bearing surface (15) by means of a sealing feed guide (14), the leaf spring portion (51) prestressing the closing portion (50) elastically against the bearing surface (15).

16. Printer (101) according to Claim 15, **characterized in that** the bearing surface (15) is provided with a soft covering (56).

17. Printer (101) according to Claim 16, **characterized in that** the soft covering (56) consists of felt (57).

18. Printer (101) according to Claim 15, **characterized in that** the seal has, in a continuation opposite to the output direction (12), a sliding surface which adjoins the bearing edge and which forms an acute angle with the bearing surface (15) at the sealing feed guide (14).

19. Printer (101) according to Claim 15, **characterized in that** the seal is designed to be longer in the longitudinal direction that the output port.

20. Printing method for a printer (101) according to Claim 1 or 15, **characterized in that** a control unit (93) controls the media feed out of a media stock (92) and is designed in such a way that, in a first step (a) of a printing operation, printing medium (91) from the media stock (92) is transported in the output direction (12) on the far side of the sealing closure (2), in a second step (b) printed printing medium (91) is separated from the media stock (92), and, in a third step (c), the remaining printing medium (91) connected to the media stock (92) is transported back opposite to the output direction (12) until there is no longer any printing medium (91) located between the bearing surface (15) and the sealing feed guide (14).

21. Printing method according to Claim 20, **characterized in that** the printer (101) has a sensor (97) which communicates to the control unit (93) whether printing medium (91) is located in the region of the sealing feed guide (14) at the bearing surface (15) or not.

## Revendications

1. Imprimante (101) comportant une ouverture oblongue (30) pour la sortie des supports d'impression, destinée notamment à un tachygraphe numérique pour véhicule automobile, ladite imprimante ayant au moins une surface d'appui (15) qui limite dans le sens transversal l'ouverture (30) pour la sortie des supports d'impression et le long de laquelle le support d'impression (91) glisse lors de sa sortie, **caractérisée par le fait que** l'ouverture (30) de sortie des supports d'impression comporte un clapet d'étanchéité (2) oblong, qui est mobile dans le sens transversal et qui appuie d'une façon élastique par un organe d'étanchéité (14) contre la surface d'appui (15), fermant ainsi l'ouverture (30) de sortie des supports d'impression, le support d'impression (91) sortant dans le sens de sortie (12) entre la surface d'appui (15) et le clapet d'étanchéité (2).

2. Imprimante (101) selon la revendication 1, **caractérisée par le fait que** le clapet d'étanchéité (2) est réalisé en tant que joint élastique avec une lèvre élastique d'étanchéité (10) qui s'applique d'une façon élastique sur la surface d'appui (15).

3. Imprimante (101) selon la revendication 2, **caractérisée par le fait que** le joint a un profil à section transversale au moins partiellement en forme de croissant, le côté convexe (11) du profil de la section transversale étant orienté à l'opposé du sens de sortie (12) du support d'impression.

4. Imprimante (101) selon la revendication 2, **caractérisée par le fait que** le joint est conçu comme joint à profil creux et que la forme de la paroi entourant un espace creux est circulaire ou elliptique ou ovale.

5. Imprimante (101) selon la revendication 3, **caractérisée par le fait que** le joint est doté, à proximité de chacune de ses extrémités dans le sens de la longueur, d'une barrette transversale de terminaison (5) logée dans la surface creuse concave (13).

6. Imprimante (101) selon la revendication 5, **caractérisée par le fait que** le plan décrit par la barrette transversale de terminaison (5) est en biais par rapport à la direction transversale, si bien qu'il forme avec l'axe longitudinal (16) du joint se développant dans le sens longitudinal un angle compris entre 30° et 85°, notamment un angle de 60°.

7. Imprimante (101) selon la revendication 6, **caractérisée par le fait que** la distance entre les barrettes transversales de terminaison (5) se trouvant aux deux extrémités opposées augmente en allant vers l'organe d'étanchéité (14).

8. Imprimante (101) selon la revendication 2, **caractérisée par le fait que**, entre le milieu dans le sens longitudinal et la barrette transversale de terminaison (5) respective, est disposé, des deux côtés et dans la surface creuse concave (13), au moins une autre barrette transversale (4) ayant une position en biais analogue, notamment parallèle à la barrette transversale de terminaison (5).

9. Imprimante (101) selon la revendication 2, **caractérisée par le fait que** au moins les barrettes transversales de terminaison (5) sont liées, le long de leur extension dans le sens transversal, complètement et d'une façon étanche à la surface creuse concave (13).

10. Imprimante (101) selon la revendication 2, **caractérisée par le fait que** le joint se compose de deux constituants (1, 3), qui ont une rigidité différente, le constituant le plus mou (3) étant placé à proximité de l'organe d'étanchéité (14) et le constituant le plus dur (1) étant placé dans la zone de fixation du joint.

11. Imprimante (101) selon la revendication 2, **caractérisée par le fait que** le joint est fixé au niveau d'une extrémité de l'ouverture de sortie du papier, dans la zone opposée à la surface d'appui (15).

12. Imprimante (101) selon la revendication 11, **caractérisée par le fait que** le joint est guidé par des pivots de centrage (21), que le joint est doté d'évidements (6) dans une zone de fixation (52) se trouvant, dans le sens transversal, à l'opposé de l'organe d'étanchéité (14), les pivots de centrage (21) étant disposés dans les évidements (6).

13. Imprimante (101) selon les revendications 10 et 12, **caractérisée par le fait que** les évidements ont, pour les pivots de centrage (21), des surfaces d'ajustage (9) qui sont formées par une couche du constituant le plus mou (1) sur le constituant le plus dur (3).

14. Imprimante (101) selon la revendication 12, **caractérisée par le fait qu'**un composant de fixation (32) coince le joint dans la zone de fixation (52).

15. Imprimante (101) selon la revendication 1, **caractérisée par le fait que** le clapet d'étanchéité (2) est conçu comme clapet d'étanchéité faisant ressort, comportant une section (51) conçue comme ressort en lame, suivie d'une section de verrouillage (50) ayant une arête d'appui essentiellement rigide, laquelle s'applique par un organe d'étanchéité (14) sur la surface d'appui (15), la section (51) à ressort en lame appliquant avec une force de contrainte la section de verrouillage (50) d'une façon élastique contre la surface d'appui (15).

16. Imprimante (101) selon la revendication 15, **caractérisée par le fait que** la surface d'appui (15) est dotée d'un revêtement mou (56).

17. Imprimante (101) selon la revendication 16, **caractérisée par le fait que** le revêtement mou (56) est en feutre (57).

18. Imprimante (101) selon la revendication 15, **caractérisée par le fait que** le joint a, en un prolongement dans le sens opposé à la direction de sortie (12) du support d'impression, une surface de glissement suivant l'arête d'appui, laquelle forme un angle aigu avec la surface d'appui (15) au niveau de l'organe d'étanchéité (14).

19. Imprimante (101) selon la revendication 15, **caractérisée par le fait que** le joint est, dans le sens de la longueur, plus long que l'ouverture de sortie.

20. Procédé d'impression pour imprimante (101) conforme à la revendication 1 ou 15, **caractérisé par le fait qu'**une unité de commande (93) contrôle l'avance du support d'impression provenant d'une réserve (92) de support d'impression et qu'il est conçu de manière telle que, au cours d'une première phase (a) d'une procédure d'impression, le support d'impression (91) provenant de la réserve (92) de support d'impression est transporté au-delà du clapet d'étanchéité (2) dans le sens de la sortie (12), au cours d'une deuxième phase (b), le support d'impression imprimé (91) est séparé de la réserve (92) de support d'impression et, au cours d'une troisième phase (c), le support d'impression (91) restant qui est lié à la réserve (92) de support d'impression est ramené en arrière à l'inverse du sens de sortie (12) jusqu'à ce qu'il n'y ait plus de support d'impression (91) entre la surface d'appui (15) et l'organe d'étanchéité (14).

21. Procédé d'impression selon la revendication 20, **caractérisé par le fait que** l'imprimante (101) comporte un détecteur (97) qui signale à l'unité de commande (93) si un support d'impression (91) se trouve ou non dans la zone de l'organe d'étanchéité (14) au niveau de la surface d'appui (15).
